# EUROPÄISCHE PATENTSCHRIFT

(11) **EP 0 800 619 B1**
(45) Veröffentlichungstag und Bekanntmachung des Hinweises auf die Patenterteilung: **26.05.1999**
(21) Anmeldenummer: 95940958.2
(22) Anmeldetag: 14.12.1995
(51) Int. Cl.: F02C 7/18, F01K 23/10

(54) **VERFAHREN ZUR KÜHLUNG DES KÜHLMITTELS EINER GASTURBINE UND VORRICHTUNG ZUR DURCHFÜHRUNG DES VERFAHRENS**
PROCESS FOR COOLING THE COOLANT OF A GAS TURBINE AND DEVICE FOR CARRYING OUT SAID PROCESS
PROCEDE DE REFROIDISSEMENT DU REFRIGERANT D'UNE TURBINE A GAZ ET DISPOSITIF DE MISE EN OEUVRE DUDIT PROCEDE

(30) Priorität: 27.12.1994 DE 4446862
(43) Veröffentlichungstag der Anmeldung: 15.10.1997
(73) Patentinhaber: SIEMENS AKTIENGESELLSCHAFT, 80333 München (DE)
(72) Erfinder: BRÜCKNER, Hermann, D-91080 Uttenreuth (DE); SCHMID, Erich, D-91080 Rathsberg (DE)
(86) Internationale Anmeldenummer: DE9501793
(87) Internationale Veröffentlichungsnummer: WO9620335

(56) Entgegenhaltungen:
- EP-A- 0 062 932
- EP-A- 0 106 313
- DE-C- 4 333 439
- GB-A- 2 264 539

## Beschreibung

Die Erfindung bezieht sich auf ein Verfahren zur Kühlung des Kühlmittels einer Gasturbine einer Gas- und Dampfturbinenanlage mit einem eine Dampftrommel umfassenden ersten Verdampferkreislauf. Sie richtet sich weiter auf eine Vorrichtung zur Kühlung des Kühlmittels einer Gasturbine einer Gas- und Dampfturbinenanlage zur Durchführung eines derartigen Verfahrens.

Eine Gas- und Dampfturbinenanlage wird üblicherweise zur Erzeugung elektrischer Energie eingesetzt. Dabei wird ein in einem Verdampferkreislauf der Dampfturbinenanlage geführtes Arbeitsmedium, üblicherweise ein Wasser-Wasser/Dampf-Gemisch, in einem Verdampfer verdampft, wobei der dabei erzeugte Dampf zur Energieerzeugung herangezogen wird.

In einem als Naturumlauf bezeichneten Verdampferkreislauf erfolgt eine teilweise Verdampfung des geführten Arbeitsmediums im Verdampfer, wobei ein Umlauf des Arbeitsmediums durch sich beim Verdampfungsprozeß einstellende Druckdifferenzen und/ oder durch die geodätische Anordnung von Verdampfer und Dampftrommel gewährleistet ist. Alternativ kann der Verdampferkreislauf auch ein Zwangsumlauf sein, bei dem der Umlauf des Arbeitsmediums durch eine Umwalzpumpe gewährleistet ist, wobei das Arbeitsmedium im Verdampfer ebenfalls mindestens teilweise verdampft. Sowohl beim Naturumlauf als auch beim Zwangsumlauf wird das Wasser-Wasser/Dampf-Gemisch aus dem Verdampfer einer in den Verdampferkreislauf geschalteten Dampftrommel zugeführt. In der Dampftrommel werden Wasser und Dampf separiert, wobei von der Dampftrommel das Wasser erneut dem Verdampfer zugeführt wird.

Eine vollständige Verdampfung mit anschließender Teilüberhitzung des Arbeitsmediums in einem Durchgang durch den Verdampfer erfolgt bei einem Zwangsdurchlauf als Verdampferkreislauf, bei dem der Durchlauf des Arbeitsmediums ebenfalls durch Pumpen gewährleistet ist.

Unabhängig davon, ob in der Dampfturbinenanlage das Naturumlauf-, das Zwangsumlauf oder das Zwangsdurchlaufprinzip Anwendung findet, wird zur Steigerung der Leistungsfähigkeit der Gasturbine und damit zur Erzielung eines möglichst hohen Wirkungsgrades einer derartigen Gas- und Dampfturbinenanlage eine besonders hohe Temperatur des Treibgases am Eintritt der Gasturbine von zum Beispiel 1000 bis 1200 °C angestrebt. Eine derartig hohe Turbineneintrittstemperatur bringt allerdings Werkstoffprobleme mit sich, insbesondere in bezug auf die Hitzebeständigkeit der Turbinenschaufeln.

Eine Steigerung der Turbineneintrittstemperatur kann dann zugelassen werden, wenn die Turbinenschaufeln soweit gekühlt werden, daß sie stets eine unterhalb der zulässigen Werkstofftemperatur liegende Temperatur aufweisen. Dazu ist es aus der EP-PS 0 379 880 bekannt, in einem der Gasturbine zugeordneten Kompressor verdichtete Luft abzuzweigen und diese als Kühlmittel dienende Luft vor Eintritt in die Gasturbine zu kühlen. Der Kühlluft bei der Kühlung entzogene Warme kann beispielsweise als Verdampfungswärme genutzt und zum Antrieb der Dampfturbine verwendet werden. Als Verdampfersystem wird dabei ein Entspannungsverdampfer mit einer Umwälzpumpe und einem Entspannungsgefaß eingesetzt. Dabei wird der Dampftrommel des Verdampferkreislaufs Wasser entnommen, das durch einen Wärmetausch mit der als Kühlmittel für die Gasturbine dienenden Kühlluft aufgeheizt und anschließend durch Entspannung im Entspannungsgefäß verdampft wird. Der somit entstandene Dampf wird der Dampfturbine zugeführt.

Eine derartige Vorrichtung zur Kühlung der Kühlluft einer Gasturbine ist für eine bestimmte Temperaturdifferenz zwischen dem der Dampftrommel entnommenen Wasser und der Kühlluft ausgelegt. Steigt zum Beispiel infolge von Spitzenlastbetrieb oder durch Prozeßdampfentnahme der Druck im Verdampferkreislauf und somit die Wassertemperatur in der Dampftrommel an, so steigt auch die Temperatur der Kühlluft der Gasturbine an. Somit ist praktisch eine Kühlung der Kühlluft auf die zur Kühlung der Gasturbine notwendige Temperatur nicht mehr gewährleistet, was einen Ausfall der Gasturbine bedingen kann.

Jeweils eine Gasturbine, deren Kühlmittel in einem Wärmetauscher rückkühlbar ist, wobei die Temperatur des Kühlmittels variierbar ist, ist aus der EP-A-0 106 313 und aus der GB-A-226 45 39 bekannt.

Der Erfindung liegt daher die Aufgabe zugrunde, ein Verfahren zur Kühlung des Kühlmittels einer Gasturbine einer Gas- und Dampfturbinenanlage mit einem eine Dampftrommel umfassenden Verdampferkreislauf anzugeben, bei dem auf besonders einfache Weise unter allen Betriebsbedingungen eine hinreichende Kühlung der Gasturbine gewährleistet ist. Dies soll mit einer besonders geeigneten Vorrichtung erreicht werden.

Diese Aufgabe wird erfindungsgemäß dadurch gelöst, daß für eine Gas- und Dampfturbinenanlage der obengenannten Art, bei der das Kühlmittel der Gasturbine durch Wärmetausch mit einem in einem an die Dampftrommel angeschlossenen zweiten oder separaten Verdampferkreislauf umlaufenden Medium gekühlt wird, die Temperatur des Kühlmittels der Gasturbine durch eine Variation von den Warmetauscher bestimmenden Parametern, insbesondere durch Variation der Temperatur des im separaten Verdampferkreislauf umlaufenden Mediums, eingestellt wird. Dabei erfolgt die Einstellung der Kühlmitteltemperatur durch Injektion von Kondensat in den separaten Verdampferkreislauf.

Die Kühlung des Kühlmittels der Gasturbine ist demnach nicht nur für eine bestimmte Temperaturdifferenz zwischen dem Kühlmittel der Gasturbine und dem das Kühlmittel kühlenden Kühlmittel ausgelegt.

Die Erfindung geht von der Überlegung aus, daß durch eine Variation von den Wärmetausch beeinflussenden Parametern, insbesondere durch eine Variation der Temperatur des im separaten Verdampferkreislauf umlaufenden Mediums, die Kühlung des Kühlmittels der Gasturbine an einen beliebigen Betriebszustand der Gas- und Dampfturbinenanlage angepaßt werden kann. Somit kann die Temperatur des Kühlmittels der Gasturbine, unabhangig von der Temperaturdifferenz zwischen dem Kühlmittel und dem umlaufenden Medium, auf einem für die Kühlung der Gasturbine ausreichenden Wert gehalten werden.

Es hat sich herausgestellt, daß durch Injektion von Kondensat in den separaten Verdampferkreislauf die Temperatur des im separaten Verdampferkreislaufs umlaufenden Mediums und somit auch die Temperatur des Kühlmittels der Gasturbine in einem weiten Bereich besonders effektiv eingestellt werden kann. Dabei bewirkt insbesondere eine hohe Temperaturdifferenz zwischen dem injizierten Kondensat und dem im separaten Verdampferkreislauf umlaufenden Medium eine effektive Möglichkeit zur Variation der den Wärmetausch bestimmenden Parameter. Die Einspeisung des Kondensats in den separaten Verdampferkreislauf durch Injektion unterstützt darüber hinaus aufgrund der Strahl- oder Sogwirkung der Injektion den Umlauf des Mediums im separaten Verdampferkreislauf oder stößt den Umlauf beim Anfahren an. Auch beim Spitzenlastbetrieb der Gas- und Dampfturbinenanlage ist eine ausreichende Kühlung des Kühlmittels der Gasturbine gewährleistet, wobei nahezu die gesamte im Wasser-Dampfkreislauf der Gas- und Dampfturbinenanlage vorhandene Kondensatmenge in den separaten Verdampferkreislauf injiziert werden kann.

Um eine Überspeisung der Dampftrommel durch das in den separaten Verdampferkreislauf injizierte Kondensat zu vermeiden, wird zweckmaßigerweise überschüssiges Wasser aus der Dampftrommel in den Speisewasserbehalter der Gas- und Dampfturbinenanlage abgelassen.

Der separate Verdampferkreislauf kann ein Naturumlauf, ein Zwangsumlauf oder ein Zwangsdurchlauf sein, wobei in jedem Fall dem Kühlmittel der Gasturbine durch Kühlung entzogene Warme dem Dampferzeugungsprozeß der Gas- und Dampfturbinenanlage zugeführt werden kann.

Bezüglich der Vorrichtung zur Kühlung des Kühlmittels einer Gasturbine einer Gas- und Dampfturbinenanlage mit einem eine Dampftrommel aufweisenden Verdampferkreislauf wird die genannte Aufgabe gelöst, indem ein sekundärseitig mit der Kühlmittelversorgung der Gasturbine verbundener Wärmetauscher primärseitig über einen separaten Verdampferkreislauf an die Dampftrommel angeschlossen ist. Zur Injizierung von Kondensat in den separaten Verdampferkreislauf und somit zur Variation der Temperatur des das Kühlmittel der Gasturbine kühlenden Kühlmittels ist dabei eine Injektorverbindung zwischen einer Speisewasserzuführung zu der Dampftrommel und dem separaten Verdampferkreislauf vorgesehen.

Die Injektorverbindung ist vorteilhafterweise drosselbar und/oder absperrbar. Zum Ablassen von überschüssigem Wasser aus der Dampftrommel ist die Dampftrommel mit dem Speisewasserbehälter der Gas- und Dampfturbinenanlage zweckmaßigerweise absperrbar verbunden.

Die mit der Erfindung erzielten Vorteile bestehen insbesondere darin, daß durch die Kühlung des Kühlmittels der Gasturbine durch Wärmetausch mit einem in einem an die Dampftrommel angeschlossenen separaten Verdampferkreislauf umlaufenden Medium sowie durch die im Bedarfsfall mögliche Einspeisung von Kondensat in den separaten Verdampferkreislauf aie Kühlung des Kühlmittels der Gasturbine in allen Betriebs zuständen der Gas- und Dampfturbinenanlage, insbesondere auch im Spitzenlastbetrieb, sichergestellt ist. Eine derartige Vorrichtung zur Kühlung des Kühlmittels der Gasturbine kann hinsichtlich Wirkungsgradkriterien für den Nennlastbetrieb der Gas- und Dampfturbinenanlage optimiert ausgelegt werden, ohne daß eine unwirtschaftliche Überdimensionierung für Spitzenlastbetrieb notwendig ist. Die Kühlung des Kühlmittels der Gasturbine, insbesondere im Spitzenlastbetrieb, ist über die mögliche Temperatureinstellung des im separaten Verdampferkreislaufs umlaufenden Mediums mittels der Kondensatinjektion sichergestellt, so daß eine derartige Gas- und Dampfturbinenanlage besonders flexibel und kostengünstig betrieben werden kann. Darüber hinaus ist bei einem Start der Gasturbine mit schnell ansteigendem Wärmeeintrag eine gezielte zwangsweise Durchströmung des im separaten Verdampferkreislauf umlaufenden Mediums durch den Wärmetauscher möglich, wodurch das Anfahrverhalten des Verdampfersystems günstig beeinflußt wird.

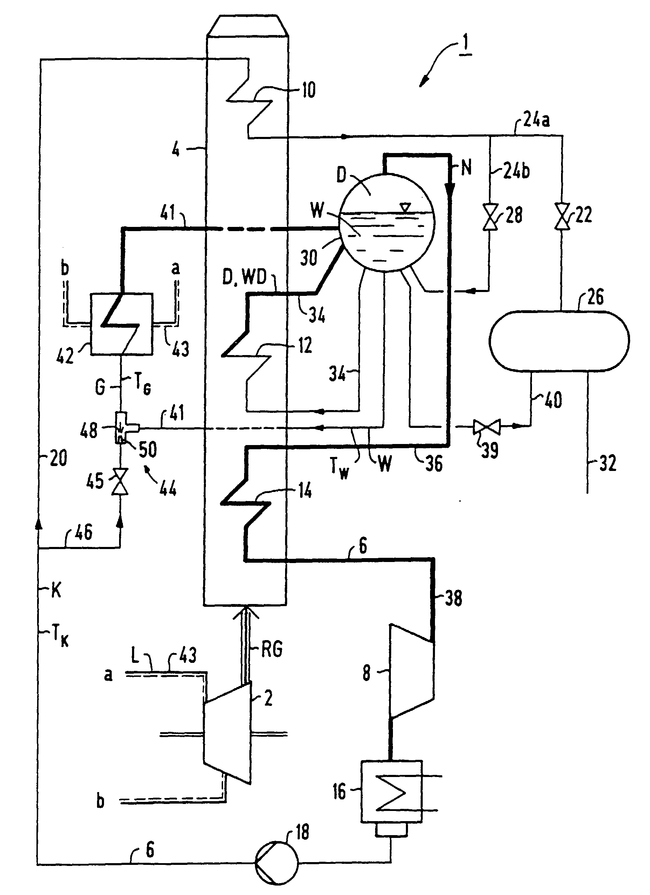

Ein Ausführungsbeispiel der Erfindung wird anhand einer Zeichnung näher erläutert. Darin zeigt die Figur schematisch eine Gas- und Dampfturbinenanlage mit einer Vorrichtung zur Kühlung des Kühlmittels für die Gasturbine.

Die in der Figur schematisch dargestellte Gas- und Dampfturbinenanlage 1 umfaßt eine Gasturbine 2 mit gasseitig nachgeschaltetem Abhitzedampferzeuger 4, dessen Heizflächen in einen Wasser-Dampfkreislauf 6 einer Dampfturbine 8 geschaltet sind. Die Heizflächen sind dabei ein Niederdruckvorwärmer 10, ein Niederdruckverdampfer 12 und ein Niederdrucküberhitzer 14.

Der Dampfturbine 8 ist ein Kondensator 16 nachgeschaltet, der über eine Kondensatpumpe 18 und eine Speisewasserzuführung 20 mit dem Niederdruckvorwärmer 10 verbunden ist. Dieser ist ausgangsseitig über eine mit einem Ventil 22 absperrbare Zuleitung 24a mit einem Speisewasserbehälter 26 und, parallel zu der Leitung 24a, über eine mit einem Ventil 28 absperrbare Leitung 24b mit einer Dampftrommel oder einem Wasser-Dampf-Trennbehälter 30 verbunden. Am Speisewasserbehälter 26 ist ausgangsseitig eine Zuleitung 32 zur Zuführung von Speisewasser in einen - nicht dargestellten - Hochdruckverdampferbereich der Gas- und Dampfturbinenanlage 1 angeordnet.

Die Dampftrommel 30 ist dampf- und wasserseitig mit dem in einen ersten Verdampferkreislauf 34 geschalteten Niederdruckverdampfer 12 verbunden. Der Verdampferkreislauf 34 ist dabei ein Naturumlauf. Er kann aber auch ein Zwangsumlauf oder ein Zwangsdurchlauf sein.

Dampfausgangsseitig ist die Dampftrommel 30 über eine Leitung 36 mit dem Niederdrucküberhitzer 16 verbunden, der seinerseits ausgangsseitig über eine Leitung 38 mit der Dampfturbine 8 verbunden ist. Die Dampftrommel 30 ist außerdem über eine mit einem Ventil 39 absperrbare Ablaßleitung 40 an den Speisewasserbehälter 26 angeschlossen.

An die Dampftrommel 30 ist ein zweiter oder separater Verdampferkreislauf 41 angeschlossen. In den separaten Verdampferkreislauf 41 ist der primärseitige Eingang eines Wärmetauschers 42 geschaltet. Der separate Verdampferkreislauf 41 ist ein Naturumlauf, der ebenfalls ein Zwangsumlauf oder ein Zwangsdurchlauf sein kann. Der Wärmetauscher 42 ist sekundärseitig in eine in die Gasturbine 2 mündende Kühlluftleitung 43 geschaltet. In der Kühlluftleitung 43 existiert dabei jeweils an den mit a und b bezeichneten Punkten eine Verbindung zur Gasturbine 2.

Die Speisewasserzuführung 20 ist über eine Injektorverbindung 44, die eine mit einem Ventil 45 absperrbare Verbindungsleitung 46 und einen Injektor 48 umfaßt, mit dem separaten Verdampferkreislauf 41 verbunden. Der Injektor 48 weist dabei eine Einspritzdüse 50 auf.

Beim Betrieb der Gas- und Dampfturbinenanlage 1 wird bei einer Verbrennung in der Gasturbine 2 entstehendes heißes und unter hohem Druck stehendes Rauchgas RG in der Gasturbine 2 entspannt. Das entspannte Rauchgas RG wird in den Abhitzedampferzeuger 4 eingeleitet und dort zur Erzeugung von Dampf für die Dampfturbine 8 genutzt. Dabei wird in der Dampftrommel 30 befindliches Arbeitsmittel oder Wasser W über den Verdampferkreislauf 34 dem Niederdruckverdampfer 12 zugeführt und dort ganz oder teilweise in ein Wasser-Dampf-Gemisch WD umgewandelt. Das Wasser-Dampf-Gemisch WD wird der Dampftrommel 30 erneut zugeführt, in der der Dampf D vom Wasser W separiert wird. Der Dampftrommel 30 entnommener Nutzdampf N wird über die Leitung 36 dem Niederdrucküberhitzer 14 zugeführt und dort überhitzt sowie sodann über die Leitung 38 der Dampfturbine 8 zugeleitet, in der er sich entspannt. Der entspannte Dampf wird in den Kondensator 16 geführt und kondensiert dort. Somit entstandenes Kondensat wird über die Kondensatpumpe 18 in der Speisewasserzuführung 20 zum Niederdruckvorwärmer 10 gefördert und von dort über die Leitung 24a dem Speisewasserbehälter 26 oder über die Leitung 24b der Dampftrommel 30 zugeführt.

Zur Kühlung der Gasturbine 2 wird dieser über die Leitung 43 Kühlluft L zugeführt. Um dabei eine ausreichende Kühlung der Gasturbine 2 zu gewährleisten, darf die Temperatur der zugeführten Kühlluft L einen Maximalwert nicht überschreiten. Dazu ist eine Kühlung der Kühlluft L erforderlich, die durch Wärmetausch im Wärmetauscher 42 erzielt wird. Der Wärmetausch im Warmetauscher 42 erfolgt dabei mit in dem an die Dampftrommel 30 angeschlossenen separaten Verdampferkreislauf 41 umlaufendem Wasser W. Um die Temperatur der Kühlluft L der Gasturbine 2 einzustellen, sind die den Wärmetausch der Kühlluft L mit dem Wasser W bestimmenden Parameter variierbar. Insbesondere ist der Massenstrom des im separaten Verdampferkreislauf 41 umlaufenden Wassers W drossel- und einstellbar. Darüber hinaus ist die Temperatur T_{W} des im separaten Verdampferkreislauf 41 umlaufenden Mediums W einstellbar.

Zur Einstellung dieser Temperatur T_{W} wird vorzugsweise über die Verbindungsleitung 46 und den Injektor 48 Kondensat K aus der Speisewasserzuführung 20 entnommen und in den separaten Verdampferkreislauf 41 eingespeist. Das so entnommene Kondensat K ist mit einer Temperatur Tₖ von etwa 40 °C bedeutend kälter als das aus der Dampftrommel 30 in den separaten Verdampferkreislauf 41 strömende Wasser W mit einer Temperatur T_{W} von etwa 150 °C. Durch den großen Temperaturunterschied ΔT des zugeführten Kondensats K zum der Dampftrommel 30 entnommenen Wasser W im separaten Verdampferkreislauf 41 ist die Temperatur T_{g} des dem Wärmetauscher 42 zugeführten Kühlmediums G, des Gemisches aus Kondensat K und Wasser W durch die mittels des Ventils 45 variierbare Menge des zugeführten Kondensats K einstellbar. Somit ist auch die Temperatur der durch den Wärmetausch im Wärmetauscher 42 gekühlten Kühlluft L der Gasturbine 2 einstellbar. Bei Spitzenlastbetrieb der Gas- und Dampfturbinenanlage 1 ist eine ausreichende Kühlung der Kühlluft L der Gasturbine 2 durch Erhöhung der injizierten Menge an Kondensat K in den separaten Verdampferkreislauf 41 gewährleistet.

Durch die Injektion von Kondensat K in den Verdampferkreislauf 41 wird die in den an die Dampftrommel 30 angeschlossenen Verdampferkreisläufen 34, 41 insgesamt umlaufende Menge des Arbeitsmediums Wasser W und Dampf D erhöht. Daraufhin in der Dampftrommel 30 anfallendes überschüssiges Wasser W wird über die Ablaßleitung 40 in den Speisewasserbehälter 26 abgelassen.

Bei der Injektion von Kondensat K in den separaten Verdampferkreislauf 41 wird durch die Einspritzdüse 50 des Injektors 48 eine Strahlwirkung erreicht. Durch den somit erzielten Mitnehmereffekt und die Saugwirkung kann der Umlauf des Arbeitsmediums oder Wassers W im separaten Verdampferkreislauf 41 unterstützt oder beim Anfahren angestoßen werden.

## Patentansprüche

1. Verfahren zur Kühlung des Kühlmittels (L) einer Gasturbine (2) einer Gas- und Dampfturbinenanlage (1) mit einem eine Dampftrommel (30) umfassenden ersten Verdampferkreislauf (34), bei dem das Kühlmittel (L) durch Wärmetausch mit in einem an die Dampftrommel (30) angeschlossenen zweiten Verdampferkreislauf (41) umlaufenden Medium (W) gekühlt wird, wobei die Temperatur des Kühlmittels (L) durch eine Variation der Temperatur (T_{g}) des im zweiten Verdampferkreislauf (41) umlaufenden Mediums (W) eingestellt wird, und wobei die Einstellung der Kühlmitteltemperatur durch Injektion von Kondensat (K) in den separaten Verdampferkreislauf (41) erfolgt.

2. Verfahren nach Anspruch 1 für eine einen Speisewasserbehälter (26) aufweisende Gas- und Dampfturbinenanlage (1), **dadurch gekennzeichnet,** daß überschüssiges Wasser (W) aus der Dampftrommel (30) in den Speisewasserbehalter (26) abgelassen wird.

3. Verfahren nach Anspruch 1 oder 2,
**dadurch gekennzeichnet**, daß der separate Verdampferkreislauf (41) ein Naturumlauf, ein Zwangsumlauf oder ein Zwangsdurchlauf ist.

4. Vorrichtung zur Kühlung des Kühlmittels (L) einer Gasturbine (2) einer Gas- und Dampfturbinenanlage (1) mit einem eine Dampftrommel (30) aufweisenden ersten Verdampferkreislauf (34), bei der ein sekundärseitig mit der Kühlmittelversorgung (43) der Gasturbine (2) verbundener Wärmetauscher (42) primärseitig über einen zweiten Verdampferkreislauf (41) an die Dampftrommel (30) angeschlossen ist, und bei der eine Injektorverbindung (44) zwischen einer Speisewasserzuführung (20) zu der Dampftrommel (30) und dem zweiten Verdampferkreislauf (41) vorgesehen ist.

5. Vorrichtung nach Anspruch 4,
**dadurch gekennzeichnet**, daß die Injektorverbindung (44) drosselbar und/oder absperrbar ist.

6. Vorrichtung nach Anspruch 4 oder 5,
**gekennzeichnet durch** eine absperrbare Ablaßleitung (40) zum Ablassen von überschüssigem Wasser (W) aus der Dampftrommel (30) in den Speisewasserbehälter (26).

## Claims

1. Method for cooling the coolant (L) of a gas turbine (2) of a gas and steam turbine plant (1) having a first evaporator loop (34) including a steam drum (30), in which the coolant (L) is cooled by means of heat exchange with a medium (W) circulating in a second evaporator loop (41) connected to the steam drum (30), wherein the temperature of the coolant (L) is adjusted by varying the temperature (T_{g}) of the medium (W) circulating in the second evaporator loop (41) and wherein the adjustment of the coolant temperature is effected by injecting condensate (K) into the separate evaporator loop (41).

2. Method according to claim 1 for a gas and steam turbine plant (1) which has a feed-water container (26), characterised in that excess water (W) is drained out of the steam drum (30) into the feed-water container (26).

3. Method according to claim 1 or 2, characterised in that the separate evaporator loop (41) operates with natural circulation, forced circulation or forced once-through flow.

4. Apparatus for cooling the coolant (L) of a gas turbine (2) of a gas and steam turbine plant (1) having a first evaporator loop (34) which has a steam drum (30), in which a heat exchanger (42), which communicates, on the secondary side, with the coolant supply (43) of the gas turbine (2), is connected, on the primary side, by way of a second evaporator loop (41) to the steam drum (30), and in which an injector connection (44) is provided between a feed-water supply line (20) leading to the steam drum (30) and the second evaporator loop (41).

5. Apparatus according to claim 4, characterised in that the injector connection (44) can be throttled and/or shut off.

6. Apparatus according to claim 4 or 5, characterised by a drain line (40), which can be shut off, for draining off excess water (W) out of the steam drum (30) into the feed-water container (26).

## Revendications

1. Procédé de refroidissement du fluide (L) réfrigérant d'une turbine (2) à gaz d'une installation (1) à turbine à gaz et à turbine à vapeur, comprenant un premier circuit (34) à évaporateur ayant un tambour (30) à vapeur dans lequel le fluide (L) réfrigérant est refroidi par échange de chaleur avec un fluide (W) circulant dans un deuxième circuit (41) à évaporateur raccordé au tambour (30) à vapeur, la température du fluide (L) réfrigérant étant réglée par une variation de la température (Tg) du fluide (W) passant dans le deuxième circuit (41) à évaporateur, et le réglage de la température du fluide réfrigérant s'effectuant par injection de produit condensé (K) dans le circuit (41) distinct à évaporateur.

2. Procédé suivant la revendication 1, pour une installation (1) à turbine à gaz et à turbine à vapeur ayant une cuve (26) d'eau d'alimentation,
caractérisé en ce que de l'eau (W) en excès est déchargée du tambour (30) à vapeur dans la cuve (26) d'eau d'alimentation.

3. Procédé suivant la revendication 1 ou 2,
caractérisé en ce que le circuit (41) distinct à évaporateur est un circuit naturel, un circuit forcé ou un passage forcé.

4. Installation de refroidissement du fluide (L) réfrigérant d'une turbine (2) à gaz d'une installation (1) à turbine à gaz et à turbine à vapeur, comprenant un premier circuit (34) à évaporateur ayant un tambour (30) à vapeur, circuit dans lequel un échangeur de chaleur (42) relié du côté secondaire à l'alimentation (43) en fluide réfrigérant de la turbine (2) à gaz est raccordé du côté primaire au tambour (30) à vapeur par un deuxième circuit (41) à évaporateur et dans lequel une liaison (44) par éjecteur est prévue entre une amenée (20) d'eau d'alimentation au tambour (30) à vapeur et le deuxième circuit (41) à évaporateur.

5. Installation suivant la revendication 4,
caractérisée en ce que la liaison (44) par éjecteur peut être étranglée et/ou obturée.

6. Installation suivant la revendication 4 ou 5,
caractérisée par un conduit (40) d'évacuation qui peut être obturé et qui est destiné à envoyer l'eau (W) en excès du tambour (30) à vapeur à la cuve (26) d'eau d'alimentation.
